(19) **Europäisches Patentamt European Patent Office Office européen des brevets**

(11) **EP 4 380 803 B1**

(12) **FASCICULE DE BREVET EUROPEEN**

(45) Date de publication et mention de la délivrance du brevet:
**01.07.2026   Bulletin 2026/27**

(21) Numéro de dépôt: **22758567.6**

(22) Date de dépôt: **01.08.2022**

(51) Classification Internationale des Brevets (IPC):
**B60C 11/24** *(2006.01)*          **B60C 23/06** *(2006.01)*
**G01M 17/02** *(2006.01)*

(52) Classification Coopérative des Brevets (CPC):
**G01M 17/02; B60C 19/00; B60C 23/064; B60C 99/00**

(86) Numéro de dépôt international:
**PCT/FR2022/051537**

(87) Numéro de publication internationale:
**WO 2023/012427 (09.02.2023 Gazette 2023/06)**

(54) **METHODE D'OBTENTION D'UN SIGNAL REPRESENTATIF DE LA DEFORMATION D'UN PNEUMATIQUE SOUMIS A DES FORCES EXTERNES EN ROULAGE**

VERFAHREN ZUR GEWINNUNG EINES SIGNALS, DAS DIE DEFORMATION EINES REIFENS REPRÄSENTIERT, DER BEIM ROLLEN EXTERNEN KRÄFTEN AUSGESETZT IST

METHOD FOR OBTAINING A SIGNAL REPRESENTATIVE OF THE DEFORMATION OF A TYRE SUBJECTED TO EXTERNAL FORCES WHILE ROLLING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **06.08.2021   FR 2108544**

(43) Date de publication de la demande:
**12.06.2024   Bulletin 2024/24**

(73) Titulaire: **COMPAGNIE GENERALE DES ETABLISSEMENTS MICHELIN**
**63000 Clermont-Ferrand (FR)**

(72) Inventeurs:
 • NUYTTEN, Simon
   **63040 CLERMONT-FERRAND Cedex 9 (FR)**
 • MARTIN, Denis
   **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2020/128277**

 • **SAVARESI S M ET AL: "New Regressors for the Direct Identification of Tire Deformation in Road Vehicles Via "In-Tire" Accelerometers", IEEE TRANSACTIONS ON CONTROL SYSTEMS TECHNOLOGY, IEEE SERVICE CENTER, NEW YORK, NY, US, vol. 16, no. 4, 1 July 2008 (2008-07-01), pages 769 - 780, XP011225842, ISSN: 1063-6536, DOI: 10.1109/TCST.2007.912245**

## Description

### Domaine de l'invention

La présente invention concerne le domaine des signaux de mesure délivrés par des moyens de mesure embarqués sur l'ensemble monté d'un véhicule terrestre lors d'un roulage.

### Arrière-plan technologique

Les développements récents des ensembles montés connectés mesurant des grandeurs physiques de l'ensemble monté à l'aide de capteurs embarqués dans l'ensemble monté conduit à déterminer l'état de l'ensemble monté et donc ouvre la porte aux développements de services liés à la surveillance de l'état de l'ensemble monté. Si, des grandeurs générales mesurées telle que la pression de gonflage de l'ensemble monté ou la température de cet ensemble monté sont peu sensibles aux bruits de mesure générés par la rotation de l'ensemble monté sur un sol de rugosité aléatoire puisque ces grandeurs générales varient peu au cours de la rotation de l'ensemble monté, des grandeurs plus fines sont fortement sensibles aux phénomènes physiques liés à la rotation de l'ensemble monté. De plus, l'ensemble monté est soumis à des efforts externes. Certains sont liés au mouvement de l'ensemble monté comme la résistance au roulement. D'autres sont appliqués à tout instant et en particulier en statique comme la charge. Ces efforts appliqués peuvent influencer des grandeurs fines que l'on cherche à mesurer. Enfin, les nouveaux services nécessitent de nettoyer les grandeurs physiques directement mesurées avant de récolter l'information utile des signaux de mesure.

L'un des objets de l'invention qui va suivre a pour objectif de résoudre les problèmes de perturbations des signaux de mesure enregistrés par un capteur afin de ne recueillir qu'une mesure nettoyée des perturbations de certains phénomènes physiques.

Le document « New Regressors for the direct Identification of the tire Déformation in road Vehicles via "in-tire Accelerométers" traite de ce sujet en cherchant à identifier les efforts subis par le pneu en roulage au travers d'un signal accélérométrique du point de fixation de l'accéléromètre sur le pneumatique. Ici, pour s'affranchir de la dépendance des signaux de l'accéléromètre à la vitesse de roulage du pneumatique, un décalage des signaux est fait au travers d'une grandeur $\Omega_0$ afin de mettre à zéro le signal accélérométriques loin de l'aire de contact. Cette étape rend indépendant la vitesse de roulage à la détection des azimuts de limitation de l'aire de contact, ce qui est ici la donnée recherchée. Cependant, c'est une méthode de détection de l'aire de contact peu robuste selon la macro-rugosité du sol et des conditions d'usage du pneumatique, c'est-à-dire la pression de gonflage, la charge appliquée au pneumatique en particulier. De plus, cette méthode emploie à la fois un accéléromètre et un codeur tour de roue.

Afin de mieux comprendre l'invention, on entend ici par les directions circonférentielle S, axiale A et radiale R, des directions définies par rapport au repère tournant de l'enveloppe pneumatique autour de son axe de rotation naturel. La direction radiale R est la direction s'éloignant perpendiculairement de l'axe de rotation naturel. La direction axiale A est la direction parallèle à l'axe de rotation naturel. Enfin la direction circonférentielle S forme un trièdre direct avec les directions radiale et axiale prédéfinies.

### Description de l'invention

L'invention porte sur une méthode d'obtention d'un signal sensible à la déformation d'une enveloppe pneumatique. L'enveloppe pneumatique est dans un état monté et gonflé sur roue afin de constituer un ensemble monté en condition de roulage à une vitesse de rotation W soumis à des efforts externes, par exemple une charge statique. L'enveloppe pneumatique a un sommet, destiné à être en contact avec le sol qui est de révolution autour d'un axe naturel de rotation. La méthode comporte les étapes suivantes :

- Fixer au moins un capteur, préférentiellement un seul capteur, sur l'enveloppe pneumatique au droit du sommet de l'enveloppe pneumatique apte à générer au moins un signal de sortie sensible au mouvement subi par ledit capteur dans l'enveloppe pneumatique ;
- Réaliser l'acquisition d'au moins un premier signal Sig temporel comprenant au moins l'amplitude du mouvement du au moins un capteur lors d'un roulage ;
- Déterminer au moins une vitesse de référence $W^{reference}$ associée à au moins une partie du premier signal, préférentiellement la au moins une vitesse de référence $W^{reference}$ étant déterminée à partir d'au moins une partie du premier signal ;
- Normaliser la au moins une partie du premier signal par une grandeur qui est une fonction F de la au moins une vitesse de référence $W^{reference}$ ;
- Rééchantillonner angulairement la au moins une partie du premier signal ;
- Agréger les données de la au moins une partie du premier signal normalisée rééchantillonnée sur au moins une sous partie de la au moins une partie du premier signal normalisée et rééchantillonnée sur plusieurs tours de roue.

On entend ici par le terme « mouvement subi par le capteur », le déplacement ou la vitesse ou l'accélération qui est appliqué au capteur en absolu par rapport à un repère galiléen mais aussi la déformation ou la vitesse de déformation ou l'accélération de déformation qui est appliquée à ce capteur, c'est-à-dire en relatif entre les diverses unités élémentaires du capteur. De ce fait, le signal de sortie du capteur est sensible à l'une au moins de ces six composantes du mouvement du capteur.

Le signal récupéré du capteur est l'amplitude temporelle du mouvement du capteur au cours d'un roulage de l'ensemble monté dans les conditions énoncés. De ce fait, on visualise sur le signal acquis les variations en amplitude du mouvement sur une partie du tour de roue de l'enveloppe pneumatique dont potentiellement celles associées à la traversée de l'aire de contact par la partie de l'enveloppe pneumatique où est fixé le capteur mais aussi celles associées à d'autres zones spécifiques du tour de roue comme celle correspondant au secteur angulaire opposé à l'aire de contact qui est sensible à la contre flèche, ou celles correspondant aux secteurs angulaires situés à 90 degrés de l'aire de contact par rapport à l'axe de rotation. Dans toutes ces zones, des variations de mouvement du capteur sont potentiellement observables sur le signal de sortie selon la sensibilité du capteur.

Sur le premier signal acquis, on associe une vitesse de référence qui peut être identifiée sur ce premier signal ou issue d'une autre source comme un autre signal ou la sortie d'une grandeur d'un système externe à l'ensemble monté. Cette vitesse de référence est associée obligatoirement à la même trame temporelle que la partie du premier signal. Cette vitesse de référence sert à normaliser l'amplitude du premier signal à l'aide d'une fonction F dont la variable est la vitesse de référence. On entend ici par le terme normaliser le fait de multiplier chaque valeur du signal par un facteur qui rend la norme de la valeur du signal ou une quantité associée à la valeur du signal égale à une valeur donnée. Par exemple, la normalisation consiste à diviser chaque entrée d'un vecteur par son amplitude pour créer un vecteur de longueur 1 connu sous le nom de vecteur unitaire. La fonction F peut être une fonction linéaire, une fonction puissance, une fonction exponentielle ou la fonction constante. En fonction de la dépendance de l'amplitude du signal du capteur à la vitesse de référence si cette dépendance est perçue comme un signal parasite de la déformation de l'enveloppe pneumatique, la normalisation du signal du capteur est entreprise. Ainsi, le premier signal normalisé devient indépendant de cette vitesse de référence. Par exemple cette vitesse de référence peut être la vitesse de rotation de l'ensemble monté ou la vitesse de translation de l'ensemble monté selon la direction de déplacement de l'ensemble monté. De ce fait, le premier signal peut être exploité indépendamment de la vitesse de référence qui est liée à la rotation de l'ensemble monté. Enfin, contrairement au document de l'état de la technique, on ne cherche pas à identifier sur le signal du capteur les phénomènes particuliers de l'aire de contact par une soustraction d'une grandeur $\Omega_0$ arbitraire mais on traitre de façon équitable l'ensemble du signal du capteur.

La méthode comprend aussi un rééchantillonnage angulaire du premier signal qui peut avoir lieu avant ou après l'étape de normalisation. Cette étape permet de transformer le signal temporel en un signal spatial en phasant le signal temporel par rapport à une ou plusieurs références angulaires de l'ensemble monté. Cette référence angulaire peut tout d'abord être prise sur le premier signal par une réponse spécifique du capteur à un azimut particulier au tour de roue. Mais, cette référence angulaire peut aussi être issue d'un autre signal d'un capteur qui partage une horloge commune avec le premier signal. Ce partage d'horloge ou synchronisation des signaux est naturelle si les deux capteurs sont issus du même dispositif ou si les signaux transitent vers un dispositif commun. Ce rééchantillonnage angulaire permet naturellement de générer un signal spatialement périodique au tour de roue. Il suffit pour cela de mener une interpolation des signaux sur un découpage angulaire figé pour générer un signal parfaitement périodique angulairement. Mais, au cas où l'ensemble monté est animé d'un mouvement à vitesse variable, ce rééchantillonnage permet malgré tout de générer un signal angulairement périodique. Les étapes de rééchantillonnage angulaire et de normalisation peuvent être réalisées dans un ordre quelconque de la méthode pourvu que les deux étapes aient été réaliser avant l'étape d'agrégation des données

La méthode comprend enfin une étape d'agrégation des données qui permet d'agréger les données de plusieurs périodes angulaires du tour de roue sur une portion de tour de roue, que celle-ci soit un tour de roue partiel, un tour de roue entier ou un multiple entier de tour de roue. Ainsi, on multiplie les données du signal sur cette sectorisation angulaire partielle, ce qui permet de tenir compte de tous les aléas à l'échelle d'une période de tour de roue comme la granulométrie du sol, un obstacle isolé sur la chaussée. L'agrégation consiste à moyenner les données des divers tours de roue en une unique valeur sur un azimut choisie de la sectorisation angulaire. Cela revient à filtrer ou moyenner les phénomènes aléatoires au tour de roue sur plusieurs tours de roue, ce qui robustifie la qualité du signal de déformation de l'enveloppe pneumatique. Cette agrégation des données est d'autant plus efficace et robuste que celle-ci a lieu sur les valeurs normalisées et rééchantillonnées angulairement, ce qui permet bien de lisser le signal sur les aléas liés à la route par exemple et sur tout un secteur angulaire du tour de roue. Bien entendu, il est possible de définir un pas angulaire spécifique pour la sectorisation angulaire sortie de l'étape d'agrégation qui peut être différent du pas angulaire issus de l'étage de rééchantillonnage angulaire. Si ce pas angulaire spécifique est fixe, le signal de déformation de l'enveloppe pneumatique est par nature périodique et adaptée à une analyse spectrale. Si le pas angulaire spécifique est fin, il permet de prendre en compte des variations minimes angulairement, ces variations étant périodiques au tour de roue, à l'aide de plusieurs tours de roue de façon homogène. Ces variations minimes sont obtenues sans avoir une discrétisation temporelle élevée bien que plus cette discrétisation soit élevée, moins la longueur du signal nécessaire pour déterminer ces variations minimes est importante. C'est cette étape qui garantit la valeur ajoutée au signal initial du capteur.

Avantageusement, l'étape de détermination de la vitesse de référence $W^{reference}$ consiste à effectuer le rapport de la variation angulaire sur la durée temporelle séparant deux positions azimutales du capteur dans l'enveloppe pneumatique autour de l'axe naturel de rotation à partir du premier signal Sig ou à partir d'un signal phasé avec le premier signal Sig, suivant la formule suivante :

[Math 1]

$$W^{reference} = \Delta(\alpha)/\Delta(t)$$

Où $\alpha$ est la position angulaire et $t$ est l'abscisse temporelle associée à la position angulaire

Dans le cas où la vitesse de référence correspond à la vitesse de rotation angulaire de l'enveloppe pneumatique, cette vitesse de référence est calculée sur une variation angulaire du signal entre deux positions connues. Préférentiellement, cette vitesse de référence est évaluée sur une durée de signal inférieure à un tour de roue, ce qui permet de la définir rapidement et d'effectuer l'étape de normalisation d'une partie du premier signal au niveau du dispositif électronique associé au capteur. De plus, celle-ci permet alors de rééchantillonner angulairement la partie du premier signal avec une meilleure précision si l'enveloppe pneumatique est animée d'une vitesse angulaire variable. En effet, au niveau d'un tour de roue, la variation de vitesse angulaire est nécessairement faible pour un pneumatique dont le développement peut s'étendre à 2 mètres pour un pneumatique pour véhicule particulier ou 3 mètres pour un pneumatique pour poids lourds. L'accélération ou la décélération appliquée à l'enveloppe pneumatique sur cette longueur est, par nature, faible avec les systèmes d'entrainement et de freinage des véhicules actuels. Bien entendu, il est tout à fait possible d'intégrer une variation de vitesse angulaire au cours du tour de roue avec un azimutage plus fin afin de tenir compte par exemple des micro-variations de vitesse angulaire qui apparaissent au cours du tour de roue comme par exemple, avant et après la traversée de l'aire de contact ou lors de la rencontre avec une discontinuité de déplacement au sol, comme une barrette transversale sur le sol. Cette précision sur la vitesse de référence au cours du tour de roue permet alors une normalisation du signal plus précis mais aussi une précision angulaire accrue sur la position angulaire des points de mesure du premier signal au cours de l'étape de rééchantillonnage angulaire, ce qui améliore la précision recherchée pour capter des variations minimes au cours du tour de roue.

Selon un mode de réalisation particulier, les positions azimutales de l'enveloppe pneumatique sont comprises dans le groupe comprenant une position angulaire détectable sur le premier signal Sig correspondant à l'entrée dans l'aire de contact, la sortie de l'aire de contact ou la position centrale de l'aire de contact ou toute position angulaire définie à partir du signal phasé avec le premier signal Sig .

Ce sont des positions azimutales ayant une incidence sur le signal du capteur de mouvement qui correspondent à des positions angulaires spécifiques. De ce fait, ces positions sont facilement repérables sur le signal du capteur. De plus, il est aisé de leur assigner leurs références azimutales. En effet, la position centrale de l'aire de contact correspond à une position azimutale de 0 ou 180 degrés par rapport à la normale au sol. Si on détermine une longueur de l'aire de contact au travers des points d'entrée et de sortie de l'aire de contact, on peut connaitre l'angle formé par l'aire de contact comme le ratio de la longueur de l'aire de contact sur le développement de l'enveloppe pneumatique ramené à un tour de roue, soit 360 degrés. On répartit équitablement le secteur formé par l'aire de contact de part et d'autre de la normale au sol. Bien entendu, l'accès à un autre signal que le premier signal permet aussi d'avoir une sectorisation angulaire plus fine que le tour de roue comme un codeur angulaire.

Selon un mode de réalisation très particulier, la détermination de l'entrée ou la sortie de l'aire de contact sur le premier signal comprend les étapes suivantes :

- Définir une valeur seuil B qui est fonction du au moins un maximum d'au moins une seconde partie du premier signal ;

- Identifier une première série d'incréments I, correspondant à l'abscisse t du au moins un premier signal où le premier signal Sig franchit la valeur seuil B suivant un sens de franchissement donné ;

- La totalité des incréments I ou les incréments I de même parité représente l'entrée ou la sortie de l'aire de contact

Avantageusement, la valeur seuil B est une valeur compris entre 0,1 et 0,5 fois du au moins un maximum d'au moins une seconde partie du premier signal.

C'est un mode de réalisation attaché à la détection des positions associées à l'entrée et la sortie de l'aire de contact. La variation de mouvement forte qui se passent au niveau de ces deux positions du tour de roue permet

**EP 4 380 803 B1**

d'appliquer une méthode élémentaire de détermination de ces deux points en traitant directement le premier signal au niveau de l'électronique du capteur par exemple. Selon, le choix de détection du sens de franchissement du seuil, il est possible de déterminer directement l'entrée ou la sortie de l'aire de contact sur divers signaux. La diversité des signaux porte d'une part sur la direction d'observation de la variable, variation de mouvement dans la direction radiale ou circonférentielle de l'enveloppe pneumatique et d'autre part sur la nature du signal, signal accélérométrique, signal de déformation selon une direction radiale etc...

Dans l'absolu, on ne cherche pas à identifier la position précise de l'aire de contact qui dépend des phénomènes aléatoires au tour de roue. La méthode mise en place, au niveau de l'étape d'agrégation des données, ne requièrent pas forcément une précision accrue sur la position absolue de l'entrée et de la sortie de l'aire de contact. La robustesse de la méthode permet de s'assurer d'une grande reproductibilité de la détermination de la position centrale de l'aire de contact quelle que soit la nature du premier signal qui est le résultat des positions d'entrée et de sortie de l'aire de contact.

Avantageusement, le pas angulaire est inférieur à 18 degrés.

Ceci permet de s'assurer que l'un des points de mesure est situé au niveau de l'aire de contact. De ce fait, des variations de mouvement conséquent seront au moins observées entre ce point d'échantillonnage et ces plus proches voisins permettant de déterminer un point d'entrée et de sortie de l'aire de contact sur le premier signal

Très avantageusement, le pas angulaire est inférieur à 6 degrés, préférentiellement inférieur à 3 degrés.

L'utilisation d'un pas angulaire plus fin permet de s'assurer de capter plusieurs points de mesure au niveau de l'aire de contact et de ce fait d'observer sur le premier signal des phénomènes de déformation à l'échelle de l'aire de contact et non plus au niveau du tour de roue. Cette finesse d'observation donne accès à des grandeurs observables différentes qui sont pertinentes pour certaines applications spécifiques. Par exemple, dans le cas de condition de route mouillée, on observe au niveau de l'aire de contact une poche d'eau a à l'avant de l'aire de contact qui modifie la géométrie de l'aire de contact. L'observation de plusieurs points au nveau de l'aire de contact permet de mesurer l'ampleur de cette poche d'eau et de ces effets sur la mécanique de l'enveloppe pneumatique.

Selon un mode de réalisation très particulier, la sous partie de la au moins une partie du premier signal est un tour de roue.

L'étape d'agrégation des données peut avoir lieu sur un tour de roue qui est la période angulaire naturelle de l'enveloppe pneumatique. Ainsi, la méthode est bien adaptée pour observer les déformations de l'enveloppe pneumatique au tour de roue. Cependant, il est tout à fait possible de restreindre l'étape d'agrégation sous un sous-secteur angulaire du tour de roue afin d'appliquer une sectorisation angulaire plus fine. Cela permet d'avoir une taille de signal à analyser raisonnable tout en se focalisant sur un secteur angulaire d'observation et profiter quand même de la périodicité naturelle de l'enveloppe pneumatique au tour de roue.

Selon un mode de réalisation privilégié, le capteur est compris dans le groupe comprenant accéléromètre, capteur piézoélectrique, capteur magnétique, capteur inductif, capteur capacitif.

Tous ces types de capteur permettent d'observer des variations de mouvement notamment au moment du passage dans l'aire de contact qui est une zone particulière du tour de roue. Certains de ces capteurs permettent d'avoir une valeur discrète sur une étendue spatiale réduite comme l'accéléromètre. D'autres permettent d'avoir une valeur discrète sur une large étendue spatiale ce qui permet de limiter l'influence de phénomènes locaux comme le capteur piézoélectrique par exemple. Certains capteurs sont influencés par des phénomènes physiques extérieures telle que la gravité terrestre comme l'accélération permettant de récupérer une information azimutale au besoin. On entend ici par le terme accéléromètre aussi bien un accéléromètre monoaxe ou un accéléromètre biaxe ou tri axes pourvu que les signaux soient phasés entre eux au niveau du capteur.

Selon un mode de réalisation préférentiel, l'étape d'agrégation des données comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique

L'agrégation a pour vocation de caler les mesures effectuées sur une nouvelle répartition angulaire du premier signal afin de donner du sens à l'ensemble des données brutes de mesure en ne privilégiant pas une zone par rapport à une autre en raison d'une abondance de points de mesure. L'étape d'agrégation a pour objectif de délivrer un signal équilibré en termes de points de mesure avec un pas angulaire choisi par l'opérateur selon les déformations de l'enveloppe pneumatique que l'on souhaite observer. A cet effet, la méthode d'optimisation de modèle paramétrique de la déformée du pneumatique est bien adaptée puisque ce modèle paramétrique peut être théorique ne prenant pas en compte les bruts de mesure liées à 'ensemble de la chaine de mesure appliquée. Le signal de sortie de l'étape d'agrégation est une sortie théorique du modèle paramétrique ayant la dispersion minimale avec l'ensemble des points de mesure enregistrés.

Selon un mode de réalisation spécifique, le mouvement du capteur est décrit par l'accélération.

Ce type de capteur permet d'obtenir une information ponctuelle du mouvement du pneumatique du fait de son implantation minimale sur l'enveloppe pneumatique. De ce fait, le capteur procure peu de perturbations aux variations de mouvement de l'enveloppe pneumatique. La miniaturisation du capteur permet aussi de multiplier les directions d'observations en employant des accéléromètres biaxes ou tri axes qui délivrent au même point matériel d'implantation

5

du capteur, plusieurs signaux selon des directions orthogonales. Enfin, l'accélération est un signal sensible du mouvement ce qui assure une grande sensibilité du capteur au mouvement de l'enveloppe pneumatique ce qui permet d'analyser finement des phénomènes locaux qui pourraient avoir lieu au niveau de l'aire de contact par exemple.

Avantageusement, ayant phasé le premier signal Sig par rapport à une position angulaire de l'enveloppe pneumatique, une correction Corr est apportée au premier signal Sig pour prendre en compte l'effet de la gravité terrestre avant l'étape de normalisation.

L'inconvénient du signal accélérométrique est que celui-ci est sensible à la gravité terrestre s'il est orienté sensiblement parallèle à la gravité terrestre. Dans le cas de l'enveloppe pneumatique, le capteur est lié en rotation à l'enveloppe pneumatique. De ce fait, lorsque le capteur est orienté radialement ou circonférentiellement, l'amplitude du signal du capteur est influencée par la gravité terrestre au cours d'un tour de roue. En effet, celui-ci se retrouve dans le signal sous la forme d'une fonction sinusoïdale d'amplitude liée à la gravité terrestre présentant ses nœuds à des azimuts de l'enveloppe pneumatique séparés de 180 degrés lorsque l'orientation du capteur est aligné avec le vecteur gravitationnel, c'est-à-dire sensiblement perpendiculaire au sol. Inversement, lorsque le capteur est orienté parallèle au sol, ce qui correspond à deux positions azimutales distantes de 180 degrés l'une de l'autre et généralement à +/- 90 degrés du vecteur gravitationnel, le signal du capteur n'est pas influencé par la gravité terrestre. Afin d'éliminer cette composante parasite du signal accélérométrique, il convient de combiner l'amplitude du signal par une fonction sinusoïdale correspondant en ayant phasé le premier signal du capteur avec la verticale au sol correspondant à la direction du vecteur gravitationnel.

Selon un mode de réalisation très spécifique, le premier signal Sig comprend l'amplitude de l'accélération selon la direction normale au sommet de l'enveloppe pneumatique.

C'est l'une des deux orientations sensibles à la gravité terrestre pour l'accélération. L'orientation du capteur au sein de l'enveloppe pneumatique est plus aisée selon cette direction et permet de concentrer l'influence de la gravité terrestre sur les positions azimutales de 0 et 180 degrés par rapport à la droite perpendiculaire au sol. Ainsi, les positions azimutales situées à +/- 90 degrés de ces positions ne sont pas bruitées par la gravité terrestre ce qui permet d'exploiter directement les signaux de l'accéléromètre dans ces secteurs angulaires spécifiques sans l'étape de correction de la gravité terrestre.

Très avantageusement, la fonction F est proportionnelle au carré de la vitesse de référence $W^{référence}$.

Dans le cas d'un signal de capteur de nature accélérométrique par exemple dans la direction radiale ou circonférentielle à l'enveloppe pneumatique, le signal du capteur est influencé par la fonction carré de la vitesse de référence. Ainsi, l'étape de normalisation emploie de préférence la fonction carré de la vitesse de référence, préférentiellement la vitesse de référence est alors la vitesse angulaire de l'enveloppe pneumatique.

Selon un mode de réalisation privilégié, le pas angulaire de l'étape d'agrégation des données est fixe.

Ce pas angulaire peut être identique depuis l'étape de rééchantillonnage angulaire. Mais, au cas où le pas est variable au niveau de l'étape de rééchantillonnage angulaire, il convient au cours de l'étape d'agrégation de choisir un pas fixe pour agréger les données de plusieurs tours de roue. Ainsi, on obtient un signal périodique angulairement au tour de roue avec un pas angulaire fixe, ce qui permet de mener une analyse spectrale du signal issus de la méthode pour profiter de la périodicité naturelle de l'enveloppe pneumatique au tour de roue.

## Description brève des dessins

L'invention sera mieux comprise à la lecture de la description qui va suivre donnée uniquement à titre d'exemple non limitatif et faite en se référant aux figures annexées dans lesquelles les mêmes numéros de référence désignent partout des parties identiques et dans lesquelles :

- La figure 1 présente un synoptique de la méthode selon l'invention.
- La figure 2 présente une illustration d'un premier signal d'un capteur.
- La figure 3 présente le rééchantillonnage angulaire du premier signal.
- La figure 4 présente une illustration du signal rééchantillonné et normalisé du premier signal.
- La figure 5 présente une illustration du signal final après agrégation des données sur une sous partie du premier signal.

## Description détaillée de modes de réalisation

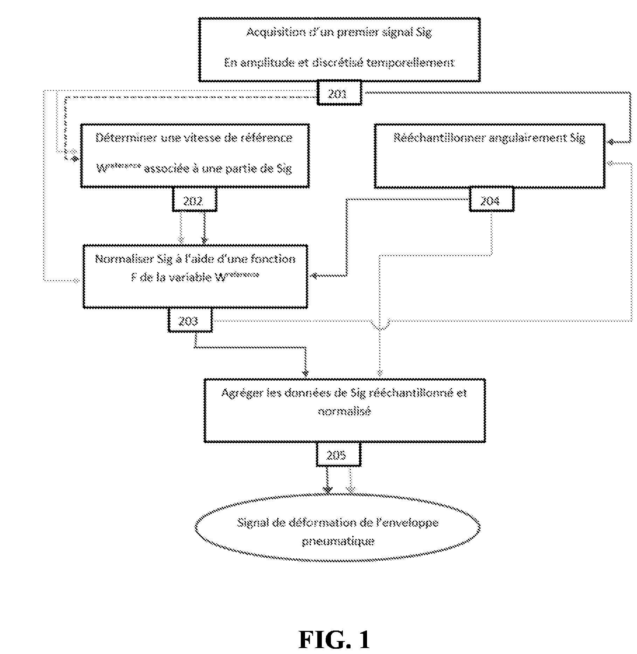

La Fig 1 représente un synoptique de la méthode selon l'invention. En partant d'un premier signal Sig obtenu par acquisition temporelle 201 de la sortie en amplitude d'un capteur de mouvement lors d'un roulage de l'enveloppe pneumatique sur laquelle est monté le capteur, on effectue un certain nombre d'étapes suivant divers cheminements possibles pour obtenir un signal de la déformation de l'enveloppe pneumatique finalement.

Le premier cheminement consiste à partir du signal temporel à la sortie de l'étape 201, à déterminer une vitesse

de référence W$^{référence}$ 202 de l'enveloppe pneumatique dans sa configuration ensemble montée, c'est-à-dire enveloppe pneumatique montée sur jante et gonflée. Cette vitesse de référence peut être une vitesse angulaire liée à la rotation naturelle de l'enveloppe pneumatique autour de son axe de rotation mais il peut aussi s'agir de la vitesse linéique de translation de l'enveloppe pneumatique selon la direction de déplacement de celle-ci. Cette grandeur peut être déterminée à partir du premier signal Sig mais aussi être déterminé à partir d'un autre signal phasé temporellement avec le premier signal.

Ensuite, il convient de normaliser le premier Signal 203 à partir du premier signal issu de l'étape 201 par une fonction F de la variable W$^{référence}$ issue de l'étape 2. A la sortie de cette étape 203, on obtient un signal normalisé du mouvement de l'enveloppe pneumatique dans une description temporelle.

Il convient alors de rééchantillonner angulairement le signal normalisé afin de retrouver un signal périodique angulairement au tour de roue au travers de l'étape 204. Ainsi, à la fin de cette étape 204, on obtient un signal normalisé et rééchantillonné angulairement sur plusieurs tours de roue.

Le second cheminement consiste à partir du premier signal Sig qui est la sortie de l'étape 201, à rééchantillonner le premier signal Sig angulairement en phasant ce premier signal à l'aide de la forme du premier signal ou en ayant un autre signal temporellement phasé avec le premier signal. L'autre signal émanant d'un autre capteur, ou autre voie du même capteur comme l'accélération circonférentielle d'un accéléromètre tridimensionnel. Ce rééchantillonnage angulaire du premier signal permet de générer un signal périodique au tour de roue à la sortie de l'étape 204

Après avoir phasé ce signal angulaire à l'aide d'un autre signal temporel, on détermine une vitesse de référence provenant d'un autre signal temporel phasé avec le premier signal, Préférentiellement c'est le même autre signal ayant servi à rééchantillonner angulairement le premier signal à l'étape 204. On identifie ainsi une vitesse de référence W$^{référence}$ à la sortie de l'étape 202.

Ensuite, la vitesse de référence permet de normaliser le signal rééchantillonné angulairement issus de l'étape 204 à l'aide d'une fonction de la variable vitesse de référence. On obtient ainsi un signal rééchantillonné et normalisé à la sortie de l'étape 203.

Enfin, quel que soit le cheminement fait, on agrège les données du signal rééchantillonné normalisé issus de l'étape 204 sur le premier cheminement ou de l'étape 203 sur le second cheminement. Cette agrégation des données est faite sur une sous partie du signal d'entrée qui est une partie du tour de roue puisque le signal rééchantillonné et normalisé est périodique au tour de roue par nature. A ce niveau, il est parfois nécessaire de rééchantillonner le signal agrégé issus de l'étape 205 avec un pas angulaire particulier, et notamment un pas fixe pour effectuer une analyse spectrale de qualité dessus.

En alternative, si le premier signal est pollué par des phénomènes physiques connus comme un signal accéléromètre influencé par la gravité terrestre, il est parfois utile bien que pas indispensable de réaliser une correction du premier signal de ce phénomène physique pour limiter le bruit parasité généré par ce phénomène physique. Cette correction peut avoir lieu entre n'importe quelle étape entre l'étape 201 et 204 mais nécessairement avant l'étape 205 d'agrégation des données, ce qui permet d'améliorer la qualité du signal de déformation de l'enveloppe pneumatique. Si la correction a lieu après l'étape de normalisation, il conviendra aussi de normaliser la correction pour ne pas introduire une erreur de correction.

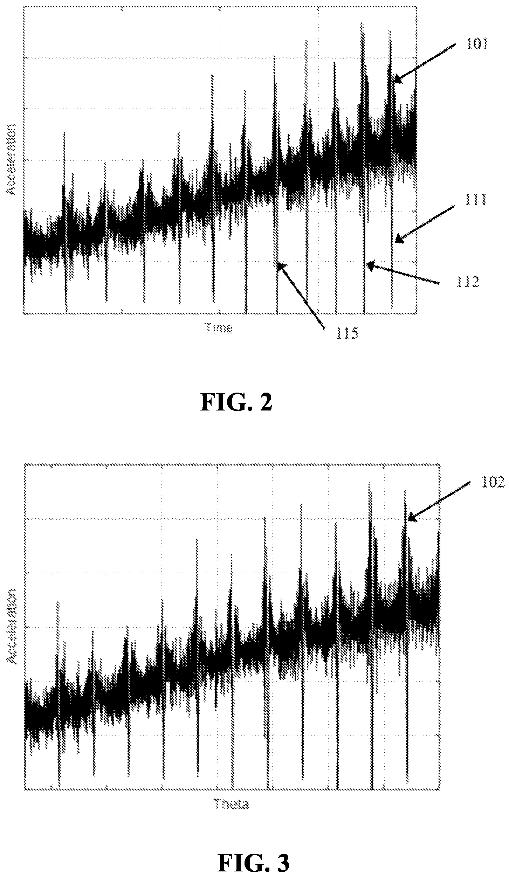

Les Fig 2 à 5 sont une illustration de la méthode par le second cheminement décrit dans le synoptique de la Fig. 1. L'illustration est faite sur un accéléromètre fixé au droit du sommet d'une enveloppe pneumatique fixé sur la gomme intérieure de l'enveloppe pneumatique (en anglais « inner liner »). Ici, l'enveloppe pneumatique est de la Marque MICHELIN CrossClimate en dimension 265/65R17 sous une charge statique de 800daN lorsqu'il est monté sur un véhicule automobile. L'ensemble monté a été gonflé à 3 bars. Les mesures ont été effectuées lors d'un roulage du véhicule sur des circuits asphaltés de rugosité variée dans des conditions standards de vitesse et de charge appliquée selon le marquage du pneumatique. L'ensemble monté est situé sur l'essieu avant du véhicule. Les mesures ont été ici faites en conduit en ligne droite majoritairement.

Sur la Fig. 2, on visualise un signal temporel 101 acquis avec une fréquence d'acquisition du signal de 3200Hz permettant d'avoir une très fine discrétisation du signal. Celui-ci enregistre donc toutes les variations de mouvement de type accélération au niveau du sommet de l'enveloppe pneumatique au cours du roulage.

L'enregistrement de la Fig. 2 a été faite en phase d'accélération du véhicule ce qui se traduit par une augmentation de l'amplitude du signal accélérométrique. Le capteur est ici un accéléromètre mono axe monté radialement par rapport au sommet de l'enveloppe pneumatique avant de constituer l'ensemble monté par des techniques usuelles de fixation connues de l'état de l'art. La transmission des données a été faite par une communication sans fil entre un dispositif électronique connecté galvaniquement à l'accéléromètre et un second dispositif radiofréquence placé au niveau du véhicule. Dans ce cas particulier, les post traitements de mesure ont été effectués au niveau du véhicule. Cependant, il est tout à fait envisageable de les réaliser au niveau du premier dispositif électronique muni d'un microcontrôleur, voire d'un microprocesseur couplé à un espace mémoire suffisant pour effectuer les opérations mathématiques élémentaires que nécessitent la méthode.

Ici, la première étape a consisté déterminer la vitesse de référence en prenant comme vitesse de référence la

EP 4 380 803 B1

vitesse angulaire de rotation. Pour cela, il convient de phaser le premier signal temporel 101 avec une position azimutale de référence du tour de roue. A cet effet, le premier signal 101 présente régulièrement des chutes du niveau d'amplitude assez forte 111, 112 qui traduit la traversée de l'aire de contact par le secteur angulaire où est situé l'accéléromètre. Par nature, ces descentes, respectivement ces remontées, de ces chutes 111, 112 représentent l'entrée, respectivement la sortie de l'aire de contact. On définira le centre de l'aire de contact comme le milieu de l'intervalle séparant l'entrée et la sortie de l'aire de contact. On affectera à ce centre la position azimutale 0 degrés qui sera notre référence azimutale. En prenant une seconde référence angulaire sur la prochaine chute du signal 112 par exemple, on détermine sur le signal 101 un tour de roue de 360 degrés et un intervalle temporelle associée à ce tour de roue. On définira la vitesse de référence W$^{référence}$ comme le rapport de la variation angulaire entre les deux centres de l'aire de contact par l'intervalle temporel séparant ces deux positions azimutales. On affectera la vitesse de référence W$^{reference}$ à la partie du signal situé entre ces deux centres de l'aire de contact. Bien entendu, on peut aussi considérer deux chutes 111, 115 non contigües du signal temporel 101 pour déterminer une seconde vitesse de référence W$^{reference}$ et affecter cette seconde vitesse à la partie du signal 101 située entre les chutes 111 et 115.

La Fig. 3 présente le résultat de l'étape de rééchantillonnage angulaire du premier signal 101 temporel. Ainsi, en profitant de la détermination des centres de l'aire de contact pour chaque chute du signal temporel effectuées à l'étape précédente, on phase facilement le signal temporel au tour de roue sur 360 degrés. On convient alors de répartir linéairement les points discrétisés de mesure sur le tour de roue. Même si une erreur de positionnement angulaire est réalisée à cette époque, l'étape d'agrégation des données permettra de lisser les résultats et de minimiser l'erreur de positionnement angulaire. De façon plus sophistiquée, ayant évalué une vitesse de référence à chaque tour de roue. Il est possible d'affecter des vitesses angulaires qui évoluent au tour de roue en prenant en compte les vitesses de référence des tours contigus. Pa exemple, ayant déterminé les vitesses de références sur trois tours consécutifs, on peut affecter sur le tour de roue central, une première vitesse de référence sur le premier quart de tour de roue comme étant, la vitesse barycentre de la vitesse de référence du tour précédent pondérée 2 et de la vitesse de référence du tour actuel pondérée 1. Le quart suivant aura une vitesse de référence comme étant la vitesse barycentre de la vitesse de référence du tour actuel pondérée 2 par la vitesse de référence du tour précédent pondérée 1. Le troisième quart de tour de roue aura une vitesse de référence comme étant la vitesse barycentre de la vitesse de référence du tour actuel pondérée 2 par la vitesse de référence du tour suivant pondérée 1. Enfin le dernier quart de tour de roue aura une vitesse de référence comme étant la vitesse barycentre de la vitesse de référence du tour actuel pondérée 1 par la vitesse de référence du tour suivant pondérée 2. On répartit l'ensemble des points de mesure discrétisés sur chaque quart de tour de roue proportionnellement au rapport des vitesses de référence de chaque quart de tour sur la vitesse de référence du tour actuel. D'autres méthodes de lissage des points peuvent aussi être effectuées. Ici, la discrétisation spatiale des points n'est pas régulière en raison de la vitesse de roulage variable. Il est tout à fait possible de rendre cette discrétisation des points du signal 102 régulière en appliquant une méthode d'interpolation des points de mesure sur une répartition angulaire donnée au tour de roue. Cela permet alors d'obtenir un signal 102 rééchantillonné angulairement avec un pas angulaire régulier. La Fig. 3 montre le signal rééchantillonné angulairement 102 qui est périodique au tour de roue ave une discrétisation quelconque des points de mesure.

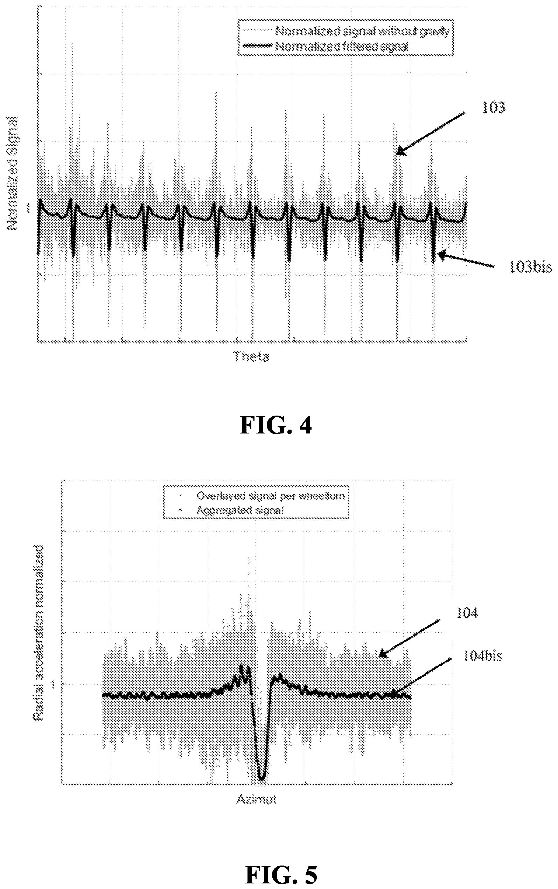

La Fig. 4 présente le résultat de l'étape de normalisation du premier signal 102 rééchantillonné angulairement sans interpolation des points. Ainsi, en profitant de la périodicité au tour de roue du premier signal rééchantillonné, on découpe facilement le signal angulaire au tour de roue ou sur un multiple du tour de roue comme illustré à la Fig. 4, ici sur 12 tours de roue. L'étape de normalisation consiste à diviser l'amplitude du signal par une fonction de la vitesse de référence associé à chaque partie de tour de roue. La vitesse de référence ayant été déterminée lors de la première étape du traitement du signal 101 par exemple. La fonction employée ici est le carré de la vitesse de référence, la vitesse de référence étant une vitesse angulaire. Le résultat observé sur les courbes 103 et 103 bis est qu'entre chaque tour de roue, l'amplitude du signal normalisé est similaire. On n'observe plus les variations d'amplitude fortes entre les divers tours de roue effectués à des vitesses différentes et sur des routes différentes. De plus, le signal se centre sur la valeur unité. Ensuite, on superpose alors les segments de tours de roue sur le même intervalle angulaire d'une longueur qui est un multiple entier de 360 degrés qui sont matérialisés par les courbes en gris formant ici un faisceau de courbe 103. Cela permet de se rendre compte de la dispersion de mesure entre les tours de roue, ce qui est accentuée par le fait que les signaux n'ont pas été corrigés de la gravité terrestre. Cependant si on applique un filtre passe bas, on obtient la courbe noire 103 bis qui est beaucoup moins chahuté puisque nettoyé des bruits parasites. Cela permet de s'apercevoir que le signal 103 bis est périodique au tour de roue avec des variations faibles entre les tours de roue. A la fin de cette normalisation du signal 102, on obtient ici un signal 103 rééchantillonné angulairement et normalisé. La Fig. 4 montre le signal rééchantillonné angulairement normalisé 103 qui est centré sur la valeur unité comme l'atteste le filtre appliqué sur la courbe 103bis.

La Fig. 5 est le résultat de l'étape d'agrégation des données issus du signal 103 de l'étape précédente. Ici, on superpose alors les segments de chaque tour de roue sur le même intervalle angulaire d'une longueur de 360 degrés qui sont matérialisés par les courbes en gris formant ici un faisceau de courbe 104. Cela permet de se rendre compte de la dispersion de mesure entre chaque tour de roue, ce qui est accentuée par le fait que les signaux n'ont pas été corrigés de la gravité terrestre. Cependant si on applique une correction de la gravité terrestre à chaque tour de roue avant l'étape de normalisation puisque l'accéléromètre est ici sensible à la gravité terrestre, l'agrégation des données par une méthode de la moyenne sur un intervalle de décile détermine la courbe 104 bis qui bien plus stable au tour de roue. Cela permet d'obtenir le signal de déformation de l'enveloppe pneumatique soumis à des efforts extérieurs, en particulier la charge statique dans ce cas, Ce signal 104bis est représentatif de la mesure de l'enveloppe pneumatique en condition de roulage à vitesse variable sur sol de rugosité quelconque. Cette courbe est un invariant de l'enveloppe pneumatique en condition de roulage sous charge statique dans un état gonflé et monté sur jante

**Revendications**

**1.** Méthode d'obtention d'un signal sensible à la déformation d'une enveloppe pneumatique dans un état monté sur roue afin de constituer un ensemble monté en condition de roulage à une vitesse de rotation W soumis à des efforts externes, par exemple une charge statique, ladite enveloppe pneumatique ayant un sommet, destiné à entrer en contact avec le sol, qui est de révolution autour d'un axe naturel de rotation, comportant les étapes suivantes :

- Fixer au moins un capteur, préférentiellement un seul capteur, sur l'enveloppe pneumatique au droit du sommet de l'enveloppe pneumatique apte à générer au moins un signal de sortie sensible au mouvement subi par ledit capteur dans l'enveloppe pneumatique ;
- Réaliser l'acquisition (201) d'au moins un premier signal Sig (101) temporel comprenant au moins l'amplitude du mouvement du au moins un capteur lors d'un roulage ;
- Déterminer au moins une vitesse de référence W$^{reference}$ (202) associée à au moins une partie du premier signal préférentiellement la au moins une vitesse de référence W$^{référence}$ étant déterminée à partir d'au moins une partie du premier signal ;
- Normaliser (203) la au moins une partie du premier signal par une grandeur qui est une fonction F de la au moins une vitesse de référence W$^{reference}$ ;
- Rééchantillonner angulairement (204) la au moins une partie du premier signal ;
- Agréger les données (205) de la au moins une partie du premier signal normalisée rééchantillonnée sur au moins une sous partie de la au moins une partie du premier signal normalisée et rééchantillonnée sur plusieurs tours de roue.

**2.** Méthode d'obtention d'un signal sensible à la déformation d'une enveloppe pneumatique selon la revendication 1 dans laquelle l'étape de détermination de la vitesse de référence W$^{reference}$ (202) consiste à effectuer le rapport de la variation angulaire sur la durée temporelle séparant deux positions azimutales du capteur dans l'enveloppe pneumatique autour de l'axe naturel de rotation à partir du premier signal Sig (101) ou à partir d'un signal phasé avec le premier signal Sig (101), suivant la formule suivante :

[Math 1]

$$W^{Reference} = \frac{\Delta(\alpha)}{\Delta(t)}$$

Où $\alpha$ est la position angulaire et t est l'abscisse temporelle associée à la position angulaire

**3.** Méthode d'obtention d'un signal sensible à la déformation d'une enveloppe pneumatique selon la revendication 2 dans laquelle les positions azimutales de l'enveloppe pneumatique sont comprises dans le groupe comprenant une position angulaire détectable sur le premier signal Sig (101) correspondant à l'entrée dans l'aire de contact, la sortie de l'aire de contact ou la position centrale de l'aire de contact ou toute position angulaire définie à partir du signal phasé avec le premier signal Sig (101).

**4.** Méthode d'obtention d'un signal sensible à la déformation d'une enveloppe pneumatique selon la revendication 3 dans laquelle la détermination de l'entrée ou la sortie de l'aire de contact sur le premier signal Sig (101) comprend les étapes suivantes :

- Définir une valeur seuil B qui est fonction du au moins un maximum d'au moins une seconde partie du premier signal (101) ;
- Identifier une première série d'incréments I, correspondant à l'abscisse t du au moins un premier signal Sig (101) où le premier signal Sig (101) franchit la valeur seuil B suivant un sens de franchissement donné ;
- La totalité des incréments I ou les incréments I de même parité représente l'entrée ou la sortie de l'aire de contact

5. Méthode d'obtention d'un signal sensible à la déformation d'une enveloppe pneumatique selon la revendication 4 dans laquelle la valeur seuil B est une valeur comprise entre un dixième et la moitié du au moins un maximum de la au moins une seconde partie du premier signal Sig (101).

6. Méthode d'obtention d'un signal sensible à la déformation d'une enveloppe pneumatique selon l'une des revendications 1 à 5 dans laquelle, l'étape de rééchantillonnage angulaire définissant un pas angulaire, le pas angulaire est inférieur à 18 degrés.

7. Méthode d'obtention d'un signal sensible à la déformation d'une enveloppe pneumatique selon la revendication 6 dans laquelle le pas angulaire est inférieur à 6 degrés, préférentiellement inférieur à 3 degrés.

8. Méthode d'obtention d'un signal sensible à la déformation d'une enveloppe pneumatique selon l'une des revendications 1 à 7 dans laquelle la sous-partie de la au moins une partie du premier signal est un tour de roue.

9. Méthode d'obtention d'un signal sensible à la déformation d'une enveloppe pneumatique selon l'une des revendications 1 à 8 dans laquelle le capteur est compris dans le groupe comprenant accéléromètre, capteur piézoélectrique, capteur magnétique, capteur inductif, capteur capacitif.

10. Méthode d'obtention d'un signal sensible à la déformation d'une enveloppe pneumatique selon l'une des revendications 1 à 9 dans laquelle l'étape d'agrégation des données (205) comprend une des méthodes comprises dans le groupe comprenant la moyenne sur un intervalle de décile, la médiane, la sélection ou l'intervalle de déciles, les méthodes d'interpolation, la moyenne pondérée ou non, l'optimisation de modèle paramétrique de la déformée du pneumatique

11. Méthode d'obtention d'un signal sensible à la déformation d'une enveloppe pneumatique selon l'une des revendications 1 à 10 dans laquelle le mouvement du capteur est décrit par l'accélération.

12. Méthode d'obtention d'un signal sensible à la déformation d'une enveloppe pneumatique selon la revendication 11 dans laquelle, ayant phasé le premier signal Sig (101) par rapport à une position angulaire de l'enveloppe pneumatique, une correction Corr est apportée au premier signal Sig (101) pour prendre en compte l'effet de la gravité terrestre avant l'étape de normalisation.

13. Méthode d'obtention d'un signal sensible à la déformation d'une enveloppe pneumatique selon l'une des revendication 11 à 12 dans laquelle le premier signal Sig (101) comprend l'amplitude de l'accélération selon la direction normale au sommet de l'enveloppe pneumatique.

14. Méthode d'obtention d'un signal sensible à la déformation d'une enveloppe pneumatique selon l'une des revendications 1 à 13 dans laquelle la fonction F est proportionnelle au carré de la vitesse de référence $W^{reference}$ .

15. Méthode d'obtention d'un signal sensible à la déformation d'une enveloppe pneumatique selon l'une des revendications 1 à 14 dans laquelle le pas angulaire à l'étape d'agrégation des données est fixe.

**Patentansprüche**

1. Verfahren zum Erhalten eines von der Verformung eines Luftreifens in einem zur Bildung einer montierten Einheit am Rad montierten Zustand unter Fahrbedingungen bei einer Rotationsgeschwindigkeit W, der externen Kräften, beispielsweise einer statischen Last, ausgesetzt ist, abhängigen Signals, wobei der Luftreifen einen Scheitel umfasst, der dazu bestimmt ist, mit dem Boden in Kontakt zu gelangen, und der sich um eine natürliche Rotationsachse dreht, beinhaltend die folgenden Schritte:

- Befestigen mindestens eines Sensors, vorzugsweise eines einzigen Sensors, an dem Luftreifen direkt unter dem Scheitel des Luftreifens, der geeignet ist, mindestens ein Ausgangssignal zu erzeugen, das von der Bewegung abhängig ist, die der Sensor in dem Luftreifen erfährt;
- Durchführen der Erfassung (201) mindestens eines ersten zeitlichen Signals Sig (101), das mindestens die Amplitude der Bewegung des mindestens einen Sensors bei einem Fahren umfasst;
- Bestimmen mindestens einer Referenzgeschwindigkeit W$^{reference}$ (202), die mindestens einem Abschnitt des ersten Signals zugeordnet ist, wobei die mindestens eine Referenzgeschwindigkeit W$^{reference}$ vorzugsweise ausgehend von mindestens einem Abschnitt des ersten Signals bestimmt wird;
- Normalisieren (203) des mindestens einen Abschnitts des ersten Signals durch eine Größe, die eine Funktion F der mindestens einen Referenzgeschwindigkeit W$^{reference}$ ist;
- Winkelmäßiges Neuabtasten (204) des mindestens einen Abschnitts des ersten Signals;
- Aggregieren der Daten (205) des mindestens einen neu abgetasteten normalisierten Abschnitts des ersten Signals über mindestens einen Unterabschnitt des mindestens einen normalisierten und neu abgetasteten Abschnitts des ersten Signals über mehrere Radumdrehungen.

2. Verfahren zum Erhalten eines von der Verformung eines Luftreifens abhängigen Signals nach Anspruch 1, wobei der Schritt des Bestimmens der Referenzgeschwindigkeit W$^{reference}$ (202) darin besteht, das Verhältnis der Winkeländerung zu der zeitlichen Dauer, die zwei Azimutpositionen des Sensors in dem Luftreifen um die natürliche Rotationsachse trennt, ausgehend von dem ersten Signal Sig (101) oder ausgehend von einem mit dem ersten Signal Sig (101) in Phase gebrachten Signal nach der folgenden Formel zu bilden:

[Math 1]

$$W^{Reference} = \frac{\Delta(\alpha)}{\Delta(t)}$$

wobei α die Winkelposition ist und t die der Winkelposition zugeordnete Zeitabszisse ist.

3. Verfahren zum Erhalten eines von der Verformung eines Luftreifens abhängigen Signals nach Anspruch 2, wobei die Azimutpositionen des Luftreifens in der Gruppe enthalten sind, die eine an dem ersten Signal Sig (101) detektierbare Winkelposition, die dem Eintreten in die Kontaktfläche, dem Austreten aus der Kontaktfläche oder der zentralen Position der Kontaktfläche entspricht, oder jede Winkelposition, die ausgehend von dem mit dem ersten Signal Sig (101) in Phase gebrachten Signal definiert wird, umfasst.

4. Verfahren zum Erhalten eines von der Verformung eines Luftreifens abhängigen Signals nach Anspruch 3, wobei das Bestimmen des Eintretens in die oder des Austretens aus der Kontaktfläche an dem ersten Signal Sig (101) die folgenden Schritte umfasst:

   - Definieren eines Schwellenwerts B, der eine Funktion des mindestens eine Maximums mindestens eines zweiten Abschnitts des ersten Signals (101) ist;
   - Identifizieren einer ersten Reihe von Inkrementen I, die der Abszisse t des mindestens einen ersten Signals Sig (101) entsprechen, wobei das erste Signal Sig (101) den Schwellenwert B in einer gegebenen Überschreitungsrichtung überschreitet;
   - Die Gesamtheit der Inkremente I oder die Inkremente mit gleicher Parität stellt bzw. stellen das Eintreten in die oder das Austreten aus der Kontaktfläche dar.

5. Verfahren zum Erhalten eines von der Verformung eines Luftreifens abhängigen Signals nach Anspruch 4, wobei der Schwellenwert B ein Wert zwischen einem Zehntel und einer Hälfte des mindestens einen Maximums des mindestens einen zweiten Abschnitts des ersten Signals Sig (101) ist.

6. Verfahren zum Erhalten eines von der Verformung eines Luftreifens abhängigen Signals nach einem der Ansprüche 1 bis 5, wobei, wenn der Schritt des winkelmäßigen Neuabtastens eine Winkelschrittweite definiert, die Winkelschrittweite weniger als 18 Grad beträgt.

7. Verfahren zum Erhalten eines von der Verformung eines Luftreifens abhängigen Signals nach Anspruch 6, wobei die Winkelschrittweite weniger als 6 Grad, vorzugsweise weniger als 3 Grad beträgt.

8. Verfahren zum Erhalten eines von der Verformung eines Luftreifens abhängigen Signals nach einem der Ansprüche 1 bis 7, wobei der Unterabschnitt des mindestens einen Abschnitts des ersten Signals eine Radumdrehung ist.

9. Verfahren zum Erhalten eines von der Verformung eines Luftreifens abhängigen Signals nach einem der Ansprüche 1 bis 8, wobei der Sensor in der Gruppe enthalten ist, die Beschleunigungsmesser, piezoelektrischen Sensor,

**EP 4 380 803 B1**

Magnetsensor, induktiven Sensor und kapazitiven Sensor umfasst.

10. Verfahren zum Erhalten eines von der Verformung eines Luftreifens abhängigen Signals nach einem der Ansprüche 1 bis 9, wobei der Schritt des Aggregierens der Daten (205) eines der Verfahren umfasst, die in der Gruppe enthalten sind, die den Mittelwert über ein Dezilintervall, den Medianwert, die Auswahl oder das Intervall von Dezilen, die Interpolationsverfahren, den gewichteten oder nicht gewichteten Mittelwert, die Optimierung eines parametrischen Modells der Deformation des Reifens beinhaltet.

11. Verfahren zum Erhalten eines von der Verformung eines Luftreifens abhängigen Signals nach einem der Ansprüche 1 bis 10, wobei die Bewegung des Sensors durch die Beschleunigung beschrieben wird.

12. Verfahren zum Erhalten eines von der Verformung eines Luftreifens abhängigen Signals nach Anspruch 11, wobei, nachdem das erste Signal Sig (101) in Bezug auf eine Winkelposition des Luftreifens in Phase gebracht wurde, eine Korrektur Corr an dem ersten Signal Sig (101) vorgenommen wird, um vor dem Schritt des Normalisierens die Wirkung der Erdschwerkraft zu berücksichtigen.

13. Verfahren zum Erhalten eines von der Verformung eines Luftreifens abhängigen Signals nach einem der Ansprüche 11 bis 12, wobei das erste Signal Sig (101) die Amplitude der Beschleunigung entlang der zum Scheitel des Luftreifens senkrechten Richtung umfasst.

14. Verfahren zum Erhalten eines von der Verformung eines Luftreifens abhängigen Signals nach einem der Ansprüche 1 bis 13, wobei die Funktion F proportional zum Quadrat der Referenzgeschwindigkeit $W^{réference}$ ist.

15. Verfahren zum Erhalten eines von der Verformung eines Luftreifens abhängigen Signals nach einem der Ansprüche 1 bis 14, wobei die Winkelschrittweite beim Schritt des Aggregierens der Daten fix ist.

**Claims**

1. Method for ascertaining a signal sensitive to the deformation of a tyre casing in a state mounted on a wheel so as to constitute a mounted assembly in rolling state with rotation speed W and subjected to external forces, for example a static load, said tyre casing having a crown, intended to enter into contact with the ground and in revolution about a natural rotational axis, comprising the following steps:

   - Fastening at least one sensor, preferentially a single sensor, to the tyre casing at the crown of the tyre casing so as to generate at least one output signal sensitive to the movement of said sensor in the tyre casing;
   - Acquiring (201) at least one first temporal signal Sig (101) comprising at least the amplitude of movement of the at least one sensor while rolling;
   - Determining (202) at least one reference speed $W^{reference}$ associated with at least one portion of the first signal, preferentially the at least one reference speed $W^{reference}$ being determined from at least one portion of the first signal;
   - Normalizing (203) the at least one portion of the first signal by a variable which is a function F of the at least one reference speed $W^{reference}$;
   - Angularly resampling (204) the at least one portion of the first signal;
   - Aggregating the data (205) from the at least one portion of the first resampled normalized signal over at least one sub-portion of the at least one portion of the first resampled and normalized signal on several wheel turns.

2. Method for ascertaining a signal sensitive to the deformation of a tyre casing according to Claim 1, wherein the step of determining (202) the reference speed $W^{reference}$ consists of establishing the ratio of the angular variation to the temporal duration separating two azimuthal positions of the sensor in the tyre casing around the natural axis of rotation, from the first signal Sig (101) or from a signal in phase with the first signal Sig (101), according to the following formula:

[Math 1]

$$W^{Reference} = \frac{\Delta(\alpha)}{\Delta(t)}$$

wherein $\alpha$ is the angular position and t is the temporal abscissa associated with the angular position.

3. Method for ascertaining a signal sensitive to the deformation of a tyre casing according to Claim 2, wherein the azimuthal positions of the tyre casing are included in the group comprising an angular position which can be detected from the first signal Sig (101), corresponding to the entry into the contact patch, the exit from the contact patch, or the central position of the contact patch, or any defined angular position from the signal in phase with the first signal Sig (101).

4. Method for ascertaining a signal sensitive to the deformation of a tyre casing according to Claim 3, wherein the determination of entering or leaving the contact patch from the first signal Sig (101) comprises the following steps:

   - Defining a threshold value B which is a function of the at least one maximum of at least one second portion of the first signal (101);
   - Identifying a first series of increments I, corresponding to the abscissa t of the at least one first signal Sig (101), wherein the first signal (101) exceeds the threshold value B along a given threshold-crossing direction;
   - All of the increments I or the increments I with the same parity represent(s) entering or leaving the contact patch.

5. Method for ascertaining a signal sensitive to the deformation of a tyre casing according to Claim 4, wherein the threshold value B is a value between 0.1 and 0.5 times the at least one maximum of at least one second portion of the first signal Sig (101).

6. Method for ascertaining a signal sensitive to the deformation of a tyre casing according to one of Claims 1 to 5, wherein, with the angular resampling step defining an angular pitch, the angular pitch is less than 18 degrees.

7. Method for ascertaining a signal sensitive to the deformation of a tyre casing according to Claim 6, wherein the angular pitch is less than 6 degrees, preferably less than 3 degrees.

8. Method for ascertaining a signal sensitive to the deformation of a tyre casing according to one of Claims 1 to 7, wherein the sub-portion of the at least one portion of the first signal is one wheel turn.

9. Method for ascertaining a signal sensitive to the deformation of a tyre casing according to one of Claims 1 to 8, wherein the sensor is included in the group comprising accelerometer, piezoelectric sensor, magnetic sensor, inductive sensor, capacitative sensor.

10. Method for ascertaining a signal sensitive to the deformation of a tyre casing according to one of Claims 1 to 9, wherein the data aggregation step (205) comprises one of the methods included in the group comprising: the mean over a decile interval, the median, the selection or interval of deciles, the methods of interpolation, the weighted or non-weighted mean, optimization of the parametric model of tyre deformation.

11. Method for ascertaining a signal sensitive to the deformation of a tyre casing according to any of Claims 1 to 10, wherein the movement of the sensor is described by acceleration.

12. Method for ascertaining a signal sensitive to the deformation of a tyre casing according to Claim 11, wherein having phased the first signal Sig (101) with respect to an angular position of the tyre casing, a correction Corr is made to the first signal Sig (101) to take account of the effect of terrestrial gravity before the normalization step.

13. Method for ascertaining a signal sensitive to the deformation of a tyre casing according to any of Claims 11 to 12, wherein the first signal Sig (101) comprises the amplitude of the acceleration in the direction normal to the crown of the tyre casing.

14. Method for ascertaining a signal sensitive to the deformation of a tyre casing according to any of Claims 1 to 13, wherein the function F is proportional to the square of the reference speed $W^{reference}$.

15. Method for ascertaining a signal sensitive to the deformation of a tyre casing according to any of Claims 1 to 14, wherein the angular pitch in the data aggregation step is fixed.

Acquisition d'un premier signal Sig

En amplitude et discrétisé temporellement

201

Déterminer une vitesse de référence

$W^{reference}$ associée à une partie de Sig

202

Rééchantillonner angulairement Sig

204

Normaliser Sig à l'aide d'une fonction

F de la variable $W^{reference}$

203

Agréger les données de Sig rééchantillonné et normalisé

205

Signal de déformation de l'enveloppe pneumatique

**FIG. 1**

**FIG. 2**

**FIG. 3**

**FIG. 4**

**FIG. 5**